# EUROPÄISCHE PATENTSCHRIFT

(11) **EP 3 456 397 B1**
(45) Veröffentlichungstag und Bekanntmachung des Hinweises auf die Patenterteilung: **13.11.2019**
(21) Anmeldenummer: 18000606.6
(22) Anmeldetag: 18.07.2018
(51) Int. Cl.: B01D 3/30, B01J 19/18, B01F 3/04, B01D 3/08, B01J 19/28, B01J 19/30, B01J 19/32

(54) **STOFFAUSTAUSCHMASCHINE**
MATERIAL EXCHANGE MACHINE
MACHINE D'ÉCHANGE DE MATIÈRE

(30) Priorität: 14.09.2017 DE 102017008628
(43) Veröffentlichungstag der Anmeldung: 20.03.2019
(73) Patentinhaber: JULIUS MONTZ GmbH, D-40723 Hilden (DE)
(72) Erfinder: Schulz, Robin, 59174 Kamen (DE); Zich, Egon, 42799 Leichlingen (DE); Jansen, Helmut, 41542 Dormagen (DE); Hugen, Thorsten Erik Alexander, 45239 Essen (DE)
(74) Vertreter: Cohausz Hannig Borkowski Wißgott

(56) Entgegenhaltungen:
- EP-A1- 0 089 128
- WO-A1-2015/101826
- WO-A1-2016/038480
- DE-A1-102010 054 516
- US-A- 5 363 909

## Beschreibung

Die Erfindung betrifft eine Vorrichtung zum Bewirken eines Stoffaustausches zwischen einer Flüssigkeit und einem Gas innerhalb eines Rotors, wobei die Flüssigkeit im Zentrum des Rotors aufgegeben und durch die von der Rotordrehung erzeugte Zentrifugalkraft nach außen getrieben wird, und wobei das Gas den Rotor umgibt und durch den Gasdruck durch den Rotor hindurch von außen nach innen gedrückt wird, entgegen der Flüssigkeitsströmung im Rotor.

Aus der WO 2015/101826 A1 und WO 2016/038480 A1 sind Stoffaustauschmaschinen bekannt mit einem Rotor, der zwei Seitenflächen aufweist, wobei im Zwischenraum zwischen den beiden Flächen sich eine Packung befindet, die bei Rotordrehung zentral aufgegebene Flüssigkeit nach außen treibt. Hierbei ist der Rotor von einem Gas umgeben, das durch den Gasdruck entgegen der Flüssigkeit durch den Rotor strömt, um einen Stoffaustausch zwischen der Flüssigkeit und dem Gas zu bewirken.

Dokumente EP 0 089 128 A1 und US 5 363 909 A offenbaren auch Stoffaustauschmaschinen mit einem Rotor.

Aufgabe der Erfindung ist es, eine Vorrichtung der eingangs genannten Art zu schaffen, bei der der Stoffaustausch und der Stofftransport wesentlich verbessert ist, bei einfacher Herstellung und Montage.

Diese Aufgabe wird erfindungsgemäß dadurch gelöst, dass der Rotor mehrere in der Rotorebene liegende Kanäle in Form von Rohren aufweist, die im Rotorzentrum beginnen und in der zylindrischen Ringfläche des Rotoraußenumfangs enden, wobei die Rohre jeweils mit einer Packung gefüllt sind, die die Kontaktfläche zwischen der Flüssigkeit und dem Gas vergrößert, und dass der Rotor zwei kreisrunde Seitenflächen aufweist, zu denen die Rotorendrehachse lotrecht ist und die miteinander einen Zwischenraum bilden, in dem die Rohre angeordnet sind.

Das Aufteilen der Rotorenpackung in einzelne Packungsbereiche innerhalb von radialen oder schrägen Kanälen innerhalb des Rotors ermöglicht einen besonders präzisen und effektiven Stoffaustausch bei einfacher Herstellung und Montage des Rotors.

Hierzu ist es besonders vorteilhaft, wenn die in den insbesondere rohrförmigen Kanälen einliegenden Packungen gewebe-, gestricke-, sieb- oder gitterförmig sind. Hierbei bestehen die in den insbesondere rohrförmigen Kanälen und insbesondere glatt oder strukturiert einliegenden Packungen aus Metall insbesondere von Strukturblechen gebildet oder aus Kunststoff oder Glasfaser.

Vorzugsweise wird vorgeschlagen, dass die inneren Enden der Kanäle oder Rohre einen inneren koaxialen Raum bilden, in den die Flüssigkeit aufgegeben wird. Hierbei ist von Vorteil, wenn die Rohre/die Kanäle im Rotor insbesondere im Rotorzentrum derart angeordnet sind, dass die Flüssigkeit nur durch die Kanäle durch den Rotor strömt.

Vorzugsweise weist der Rotor ein bis zweiunddreißig, vorzugsweise vier bis acht Kanäle insbesondere Rohre auf.

Auch können die Rohre/die Kanäle sich nach außen hin kontinuierlich oder stufenweise erweitern. Ferner können die Rohre/die Kanäle aus einzelnen separaten Abschnitten zusammengesetzt sein.

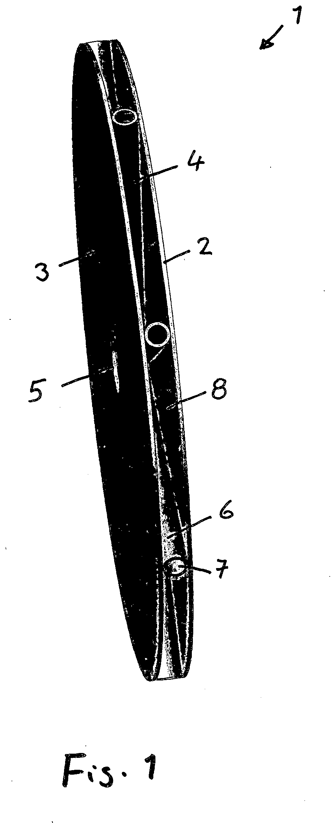

Eine vorteilhafte Ausgestaltung des erfindungsgemäßen Rotors ist in den Zeichnungen perspektivisch dargestellt. Es zeigen
- Fig. 1: den Rotor mit beiden Seitenflächen,

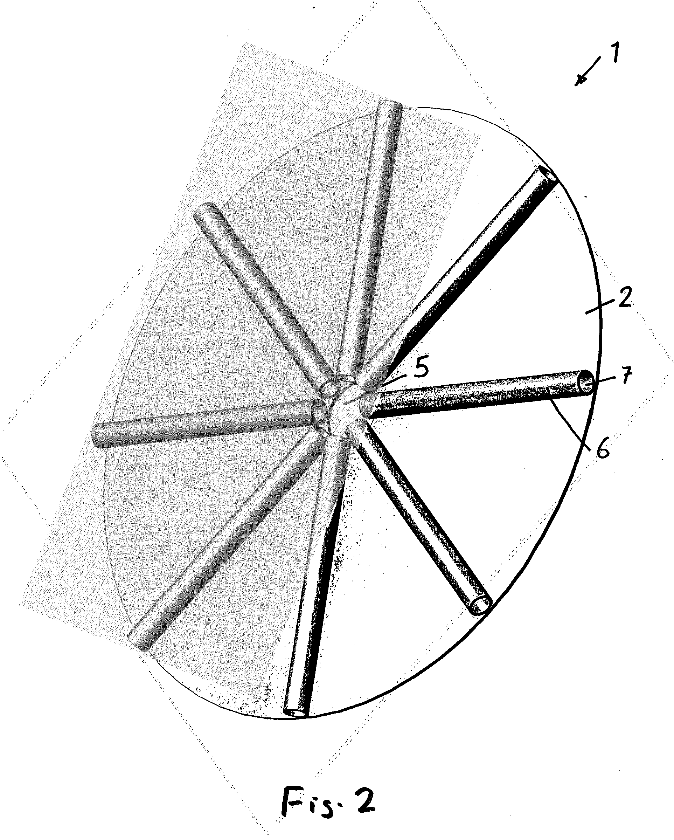

- Fig. 2: den Rotor mit auf einer Seite abgenommener Seitenfläche.

Die Stoffaustauschmaschine weist einen Rotor 1 auf, der zwei zueinander koaxiale und parallele kreisrunde Seitenflächen 2, 3 bzw. Seitenscheiben gleichen Durchmessers besitzt, die zwischen sich einen schmalen Zwischenraum 4 gleichbleibender Breite bilden. Beide Flächen/Scheiben 2, 3 sind in nicht dargestellter Weise auf einer mittigen Welle lotrecht befestigt und weisen jeweils eine mittige Öffnung 5 auf.

Im Zwischenraum 4 zwischen den beiden Flächen/Scheiben 2, 3 sind mehrere Rohre 6 radial befestigt, die Kanäle 7 bilden. Die radialen Rohre beginnen mit ihrem inneren Ende am Rand der Öffnung 5 und enden mit ihrem äußeren Ende in der äußeren koaxialen zylindrischen Ringfläche 8 des Rotors 1. Die inneren Enden der Rohre/Kanäle bilden mit den Öffnungen 5 einen inneren koaxialen Innenraum 9, in den die Flüssigkeit aufgeben wird. Die äußeren Enden der Rohre 6 enden in der äußeren zylindrischen Ringfläche 8 des Rotors. Hierbei ist dafür gesorgt, dass die Rohre 6 /die Kanäle 7 im Rotor 1 insbesondere im Rotorzentrum derart angeordnet sind, dass die Flüssigkeit nur durch die Kanäle durch den Rotor strömt.

Alle Rohre 6 sind mit einer nicht dargestellten Packung ausgefüllt, deren Aufgabe es ist, die Kontaktfläche zwischen der in den Innenraum 9 aufgegebenen Flüssigkeit mit dem von außen einwirkenden Gas zu vergrößern insbesondere um einen Stoffaustausch optimal zu bewirken. Vorzugsweise sind die in den insbesondere rohrförmigen Kanälen 7 einliegenden Packungen gewebe-, gestricke-, sieb- oder gitterförmig. Hierbei bestehen die in den insbesondere rohrförmigen Kanälen 7 einliegenden Packungen aus Metall insbesondere von Strukturblechen oder aus Kunststoff oder Glasfaser.

Die Kanäle 7 sind von Rohren 6 aus Metall oder Kunststoff gebildet, die im Rotor 1 radial oder schräg angeordnet sind. In den zwei Ausführungsbeispielen sind acht Rohre/Kanäle zwischen den Scheiben/Flächen 2 befestigt. Die Anzahl kann zwischen einem Rohr/Kanal und zweiunddreißig liegen.

In nicht dargestellten Ausführungen erweitern sich die Rohre 6 /die Kanäle 7 nach außen hin kontinuierlich oder stufenweise. Auch können die Rohre 6/Kanäle 7 sich nach außen kontinuierlich oder stufenweise erweitern. Ferner können die Rohre/Kanäle aus einzelnen separaten Abschnitten zusammengesetzt sein.

In beiden Ausführungen besteht der Rotor 1 mit seinen Rohren/Kanälen aus Metall und/oder Kunststoff, ist in einer geschlossenen gasbeaufschlagten Kammer gelagert und von einem Elektromotor angetrieben.

## Patentansprüche

1. Vorrichtung zum Bewirken eines Stoffaustausches zwischen einer Flüssigkeit und einem Gas innerhalb eines Rotors (1), wobei die Flüssigkeit im Zentrum des Rotors aufgegeben und durch die von der Rotordrehung erzeugte Zentrifugalkraft nach außen getrieben wird, und wobei das Gas den Rotor umgibt und durch den Gasdruck durch den Rotor hindurch von außen nach innen gedrückt wird entgegen der Flüssigkeitsströmung im Rotor, **dadurch gekennzeichnet, dass** der Rotor (1) mehrere in der Rotorebene liegende Kanäle (7) in Form von Rohren (6) aufweist, die im Rotorzentrum (9) beginnen und in der äußeren zylindrischen Ringfläche des Rotoraußenumfangs (8) enden, wobei die Rohre jeweils mit einer Packung gefüllt sind, die die Kontaktfläche zwischen der Flüssigkeit und dem Gas vergrößert, und dass der Rotor zwei kreisrunde Seitenflächen aufweist, zu denen die Rotorendrehachse lotrecht ist und die miteinander einen Zwischenraum bilden, in dem die Rohre angeordnet sind.

2. Vorrichtung nach Anspruch 1, **dadurch gekennzeichnet, dass** die Rohre (6) aus Metall oder Kunststoff gebildet sind, die im Rotor (1) radial oder schräg angeordnet sind.

3. Vorrichtung nach Anspruch 1 oder 2, **dadurch gekennzeichnet, dass** die in den insbesondere rohrförmigen Kanälen (7) einliegenden Packungen gewebe-, gestricke-, sieb- oder gitterförmig und insbesondere glatt oder strukturiert sind.

4. Vorrichtung nach einem der vorherigen Ansprüche, **dadurch gekennzeichnet, dass** die in den insbesondere rohrförmigen Kanälen (7) einliegenden Packungen aus Metall insbesondere von Strukturblechen gebildet oder aus Kunststoff oder Glasfaser bestehen.

5. Vorrichtung nach einem der vorherigen Ansprüche, **dadurch gekennzeichnet, dass** die inneren Enden der Kanäle (7) oder Rohre (6) einen inneren koaxialen Raum (9) bilden, in den die Flüssigkeit aufgegeben wird.

6. Vorrichtung nach einem der vorherigen Ansprüche, **dadurch gekennzeichnet, dass** die Rohre (6)/die Kanäle (7) im Rotor (1) insbesondere im Rotorzentrum derart angeordnet sind, dass die Flüssigkeit nur durch die Kanäle durch den Rotor strömt.

7. Vorrichtung nach einem der vorherigen Ansprüche, **dadurch gekennzeichnet, dass** der Rotor (1) ein bis zweiunddreißig, vorzugsweise vier bis acht Kanäle insbesondere Rohre (6) aufweist.

8. Vorrichtung nach einem der vorherigen Ansprüche, **dadurch gekennzeichnet, dass** die Rohre (6)/die Kanäle (7) nach außen hin sich kontinuierlich oder stufenweise erweitern.

9. Vorrichtung nach einem der vorherigen Ansprüche, **dadurch gekennzeichnet, dass** die Rohre (6)/die Kanäle (7) aus einzelnen separaten Abschnitten zusammengesetzt sind.

## Claims

1. Device for producing a mass transfer between a liquid and a gas inside a rotor (1), the liquid being delivered in the centre of the rotor and driven outwards by the centrifugal force generated by the rotation of the rotor, and the gas surrounding the rotor and being forced inwards through the rotor by the gas pressure, counter to the liquid flow in the rotor, **characterized in that** the rotor (1) comprises a plurality of channels (7) in the form of tubes (6) and lying in the plane of the rotor, which begin in the centre of the rotor (9) and terminate in the outer cylindrical annular surface of the outer circumference of the rotor (8), the tubes each being filled with a packing, which increases the area of contact between the liquid and the gas, and **in that** the rotor comprises two circular lateral faces, to which the axis of rotation of the rotor runs perpendicular and which form a space between them in which the tubes are arranged.

2. Device according to Claim 1, **characterized in that** the tubes (6) are formed from metal or plastic, which are arranged radially or at an angle in the rotor (1).

3. Device according to Claim 1 or 2, **characterized in that** the packings enclosed in the channels (7), particularly tubular channels, are of a woven, knitted, meshed or latticed form, and are in particular smooth or structured.

4. Device according to one of the preceding claims, **characterized in that** the packings enclosed in the channels (7), particularly tubular channels, are composed of metal, in particular formed from structured sheet metal, or of plastic or glass fibres.

5. Device according to one of the preceding claims, **characterized in that** the inner ends of the channels (7) or tubes (6) form an inner coaxial space (9) into which the liquid is delivered.

6. Device according to one of the preceding claims, **characterized in that** the tubes (6)/the channels (7) are arranged in the rotor (1), particularly in the centre of the rotor, in such a way that the liquid flowing through the rotor flows only through the channels.

7. Device according to one of the preceding claims, **characterized in that** the rotor (1) comprises one to thirty-two, preferably four to eight channels, in particular tubes (6).

8. Device according to one of the preceding claims, **characterized in that** the tubes (6)/the channels (7) extend outwards continuously or in steps.

9. Device according to one of the preceding claims, **characterized in that** the tubes (6)/the channels (7) are assembled from individual, separate portions.

## Revendications

1. Dispositif destiné à effectuer un échange de matière entre un liquide et un gaz à l'intérieur d'un rotor (1), le liquide étant délivré au centre du rotor et entraîné vers l'extérieur par la force centrifuge générée par la rotation du rotor, et le gaz entourant le rotor et étant pressé de l'extérieur vers l'intérieur à travers le rotor par la pression du gaz dans la direction opposée au flux de liquide dans le rotor, **caractérisé en ce que** le rotor (1) comporte une pluralité de conduits (7) en forme de tubes (6) qui sont situés dans le plan du rotor, qui commencent au centre (9) du rotor et qui se terminent dans la surface annulaire cylindrique extérieure de la périphérie extérieure (8) du rotor, les tubes étant chacun remplis d'une matière de remplissage qui augmente la surface de contact entre le liquide et le gaz, et **en ce que** le rotor comporte deux surfaces latérales circulaires auxquelles l'axe de rotation du rotor est perpendiculaire et qui forment conjointement un espace intermédiaire dans lequel les tubes sont disposés.

2. Dispositif selon la revendication 1, **caractérisé en ce que** les tubes (6), sont disposés radialement ou obliquement dans le rotor (1) qui sont formés à partir d'un métal ou d'une matière synthétique.

3. Dispositif selon la revendication 1 ou 2, **caractérisé en ce que** les matières de remplissage, incorporées dans les conduits (7) notamment tubulaires, se présentent sous la forme d'un tissu, d'un tricot, d'un tamis ou d'une grille et sont en particulier lisses ou structurées.

4. Dispositif selon l'une des revendications précédentes, **caractérisé en ce que** les matières de remplissage, incorporées dans les conduits (7) notamment tubulaires, sont en métal, notamment sont formées à partir de plaques structurelles, ou sont en matière synthétique ou en fibre de verre.

5. Dispositif selon l'une des revendications précédentes, **caractérisé en ce que** les extrémités intérieures des conduits (7) ou des tubes (6) forment un espace coaxial intérieur (9) dans lequel le liquide est délivré.

6. Dispositif selon l'une des revendications précédentes, **caractérisé en ce que** les tubes (6)/les conduits (7) du rotor (1) sont disposés notamment au centre du rotor de sorte que le liquide ne s'écoule à travers le rotor que par les conduits.

7. Dispositif selon l'une des revendications précédentes, **caractérisé en ce que** le rotor (1) comporte un à trente-deux, de préférence quatre à huit, conduits notamment tubes (6).

8. Dispositif selon l'une des revendications précédentes, **caractérisé en ce que** les tubes (6)/les conduits (7) s'élargissent vers l'extérieur de manière continue ou étagée.

9. Dispositif selon l'une des revendications précédentes, **caractérisé en ce que** les tubes (6)/les conduits (7) sont composés de parties individuelles distinctes.
